# DEMANDE DE BREVET EUROPEEN

(11) **EP 1 308 623 A1**
(43) Date de publication de la demande: **07.05.2003**
(21) Numéro de dépôt: 02292576.2
(22) Date de dépôt: 18.10.2002
(51) Int. Cl.: F04C 2/107, B65G 53/08

(54) **Systeme de fixation pour machine a projeter**

(30) Priorité: 31.10.2001 FR 0114138
(71) Demandeur: Lancy Mixjet, 33360 Floirac (FR)
(72) Inventeur: Vidal, Lucien, 33360 Latresne (FR)
(74) Mandataire: Intès, Didier Gérard André

(57) **Abrégé**

L'invention concerne un système de fixation, destiné à relier des moyens d'entraînement d'un arbre moteur, au bord d'un premier évidement ménagé dans une paroi, ladite paroi séparant un espace externe, dans lequel se situent lesdits moyens d'entraînement dudit arbre moteur, et un espace interne dans lequel se situe un organe d'entraînement. L'arbre moteur traverse ledit évidement et est relié audit organe d'entraînement pour l'entraîner selon un mouvement excentrique. Le système de fixation comprend : des moyens de fixation déformables (32) présentant un second évidement central (38), lesdits moyens de fixation déformables (32) comportant un bord périphérique (34) solidaire de ladite paroi (25) au voisinage du bord dudit premier évidement (30) de ladite paroi (25) et un bord intérieur (46) défini par ledit second évidement central (38), ledit arbre moteur (22) traversant ledit second évidemment central (38) ; et lesdits moyens d'entraînement (24) de l'arbre moteur (22) sont solidaires desdits moyens de fixation déformables (32).

## Description

La présente invention se rapporte à un système de fixation, notamment pour machine à projeter du béton ou du mortier, ledit système de fixation étant susceptible de relier des moyens d'entraînement d'un arbre moteur, au bord d'un évidement ménagé dans une paroi. Ladite paroi est susceptible de séparer un espace interne et un espace externe, les moyens d'entraînement de l'arbre moteur étant situés dans l'espace externe, et l'arbre moteur qui traverse l'évidemment étant relié à un organe d'entraînement situé dans l'espace interne. L'arbre moteur est susceptible d'entraîner l'organe d'entraînement selon un mouvement ayant une composante excentrique.

Un domaine d'application envisagé est notamment, mais non exclusivement, celui des machines destinées à pomper, transporter et projeter le mortier ou le béton, dans lesquelles on utilise une pompe de type pompe Moineau. Ce type de pompe comporte un rotor susceptible d'être entraîné en rotation autour de son axe, ledit rotor décrivant simultanément un mouvement ayant une composante excentrique.

Des dispositifs connus comportant un cardan permettent d'entraîner un organe d'entraînement relié à un arbre moteur dont l'axe est maintenu en position fixe, selon un mouvement ayant une composante excentrique. Ainsi, l'organe d'entraînement, généralement constitué d'un arbre, est entraîné en rotation par l'arbre moteur, les deux arbres formant un angle susceptible de varier, dans une certaine mesure, au cours de la rotation sans affecter de façon substantielle la qualité de la transmission.

Des organes d'entraînement ou des dispositifs de transmission entre des moyens d'entraînement d'un arbre moteur et un bloc comportant un arbre mené susceptible d'être en mouvement par rapport audit arbre moteur, sont généralement constitués d'un arbre muni d'un cardan à chaque extrémité, chaque cardan étant respectivement relié à l'arbre moteur et à l'arbre mené. Ces cardans sont susceptibles d'être réalisés par des moyens d'accouplement élastiques.

Un problème qui se pose et que vise à résoudre la présente invention est alors d'entraîner un organe d'entraînement selon un mouvement ayant une composante excentrique, sans relier l'arbre moteur audit organe d'entraînement par des moyens formant cardan qui sont généralement volumineux et susceptibles de s'user par friction lorsqu'ils sont entraînés dans des substances abrasives ou par attaque chimique lorsque la substance contient des agents corrosifs.

A cet effet, selon un premier objet, la présente invention propose un système de fixation susceptible de relier les moyens d'entraînement d'un arbre moteur au bord d'un premier évidement ménagé dans une paroi, ladite paroi séparant l'espace externe, dans lequel se situent lesdits moyens d'entraînement dudit arbre moteur, et l'espace interne dans lequel se situe l'organe d'entraînement, ledit arbre moteur traversant ledit évidement et étant relié audit organe d'entraînement pour l'entraîner selon un mouvement ayant une composante excentrique par rapport à un axe fixe, ledit système de fixation comprenant, selon l'invention : des moyens de fixation déformables présentant un second évidement central, lesdits moyens de fixation déformables comportant un bord périphérique solidaire de ladite paroi au voisinage du bord dudit premier évidement de ladite paroi et un bord intérieur défini par ledit second évidement central, ledit arbre moteur traversant ledit second évidemment central ; et lesdits moyens d'entraînement de l'arbre moteur sont solidaires desdits moyens de fixation déformables de façon que lesdits moyens de fixation déformables soient susceptibles de se déformer lorsque lesdits moyens d'entraînement de l'arbre moteur sont guidés selon ladite composante excentrique dudit mouvement par ledit arbre moteur.

Ainsi, une caractéristique de l'invention réside dans le mode de liaison des moyens d'entraînement de l'arbre moteur et de la paroi au moyen desdits moyens de fixation déformables qui permettent, non seulement le maintien des moyens d'entraînement en regard de l'évidement, mais aussi leur déplacement relatif par rapport à la paroi, l'axe de l'arbre moteur étant susceptible d'être incliné par rapport au plan moyen de la paroi autour d'un axe perpendiculaire audit plan moyen. De la sorte, l'arbre moteur, lié en rotation aux moyens d'entraînement dudit arbre moteur, est susceptible d'entraîner ledit organe d'entraînement selon un mouvement ayant une composante excentrique par rapport à un axe fixe, lesdits moyens de fixation déformables se déformant selon ladite composante excentrique dudit mouvement. Ainsi, l'arbre moteur est apte à entraîner ledit organe d'entraînement en rotation tout ayant un mouvement excentrique par rapport à un axe fixe. Cette configuration présente les mêmes fonctionnalités que les moyens formant cardan, sans avoir les problèmes d'encombrement du cardan et de son usure.

Bien que lesdits moyens de fixation déformables soient susceptibles de se déformer, ils bloquent néanmoins en rotation lesdits moyens d'entraînement de l'arbre moteur.

Avantageusement, les moyens de fixation déformables sont constitués d'un disque déformable susceptible de s'étendre entièrement dans l'espace situé entre le bord dudit premier évidement et ledit arbre d'entraînement de façon à réaliser une paroi étanche entre ledit espace interne et ledit espace externe. Ainsi, les moyens de fixation déformables, ou disque de fixation déformable, obstruent entièrement ledit premier évidement et ledit arbre moteur les traverse par ledit second évidemment de façon étanche.

Selon un mode de réalisation de l'invention particulièrement avantageux, le système de fixation comprend en outre des moyens formant boite à joints susceptibles de relier ensemble lesdits moyens d'entraînement de l'arbre moteur et lesdits moyens de fixation déformables, lesdits moyens formant boite à joints présentant un bord externe, un bord interne et une face d'appui, ledit bord externe étant solidaire desdits moyens de fixation déformables au voisinage dudit bord intérieur dudit second évidemment central, ledit bord interne entourant ledit arbre moteur et lesdits moyens d'entraînement de l'arbre moteur étant solidaires de ladite face d'appui.

Ainsi, selon ce mode de réalisation de l'invention, les moyens d'entraînement de l'arbre moteur sont solidement reliés auxdits moyens de fixation déformables par l'intermédiaire desdits moyens formant boite à joints. Ces derniers permettent, en outre, de combler de façon étanche, l'espace entre lesdits moyens de fixation déformables et ledit arbre moteur.

De la sorte, le bord périphérique des moyens de fixation déformables étant également susceptible d'être relié de façon étanche au bord dudit premier évidemment ménagé dans la paroi, on obtient une paroi globale étanche de laquelle fait saillie ledit arbre moteur. L'axe dudit arbre moteur étant susceptible d'être incliné par rapport à un axe perpendiculaire à ladite paroi globale durant la rotation dudit arbre moteur.

Avantageusement, lesdits moyens formant boite à joints comportent un réceptacle à lubrifiants présentant un orifice de remplissage débouchant vers l'extérieur et au moins un orifice d'écoulement débouchant dans ledit bord interne en contact avec ledit arbre moteur. Selon un mode de mise en oeuvre de l'invention particulièrement avantageux, ledit organe d'entraînement comporte un arbre d'entraînement s'étendant d'une première extrémité reliée audit arbre moteur à une seconde extrémité reliée par des moyens formant cardan à un rotor, ledit rotor étant susceptible d'être entraîné en rotation autour de son axe, ledit rotor décrivant simultanément un mouvement ayant une composante excentrique.

Ainsi, la composante excentrique du mouvement de l'organe d'entraînement est imposée par ledit rotor auquel il est relié par les moyens formant cardant. De la sorte, ladite seconde extrémité permet l'entraînement en rotation dudit rotor, qui décrit simultanément un mouvement ayant une composante excentrique.

De façon préférentielle, ledit arbre moteur et ledit organe d'entraînement sont reliés ensemble par une liaison rigide de façon que ledit arbre moteur soit susceptible de décrire un mouvement comportant ladite composante excentrique, par quoi ledit arbre moteur est susceptible de guider lesdits moyens d'entraînement de l'arbre moteur selon ledit mouvement à composante excentrique et lesdits moyens d'entraînement de l'arbre moteur de déformer lesdits moyens de fixation déformables. De la sorte, l'arbre moteur et l'organe d'entraînement sont complètement solidaires et le mouvement dudit rotor selon sa composante excentrique, se répercute directement sur lesdits moyens d'entraînement de l'arbre moteur qui déforme simultanément lesdits moyens de fixation déformables selon ladite composante excentrique dudit mouvement.

Selon un second objet, la présente invention propose une machine à pomper ou à projeter du béton ou du mortier, comprenant : un réceptacle présentant une première paroi dans laquelle est ménagé un premier évidement et une seconde paroi opposée présentant un orifice de sortie, la portion dudit réceptacle située entre lesdites parois définissant un espace interne ; des moyens formant pompe prolongeant ledit orifice de sortie, lesdits moyens formant pompe présentant un rotor faisant saillie dans ledit réceptacle, ledit rotor étant susceptible de décrire simultanément, un mouvement de rotation autour de son axe et un mouvement ayant une composante excentrique par rapport à l'axe de la pompe qui est fixe ; des moyens d'entraînement d'un arbre moteur situés dans l'espace externe et reliés au bord dudit premier évidement au moyen d'un système de fixation comportant des moyens de fixation déformables présentant un second évidement central, lesdits moyens de fixation déformables comportant un bord périphérique solidaire de ladite paroi au voisinage du bord dudit premier évidement de ladite paroi et un bord intérieur défini par ledit second évidement central, ledit arbre moteur traversant ledit second évidemment central ; lesdits moyens d'entraînement de l'arbre moteur étant solidaires desdits moyens de fixation déformables de façon que lesdits moyens de fixation déformables soient susceptibles de se déformer lorsque lesdits moyens d'entraînement de l'arbre moteur sont guidés selon ladite composante excentrique dudit mouvement par ledit arbre moteur.

Ainsi, selon ce second objet, l'invention propose une machine à pomper, à transporter ou à projeter notamment du mortier ou du béton, que l'on décrira plus en détail dans la description qui va suivre.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle d'une machine selon une coupe longitudinale montrant une application de l'invention ;
- la Figure 2, est une vue schématique partielle de détail de la Figure 1 montrant l'invention ;
- la Figure 3 est une vue schématique illustrant le fonctionnement de l'objet de l'invention ;
- la Figure 4 est une seconde vue de détail de la Figure 1 ; et,
- la Figure 5 est une vue schématique partielle de droite par rapport à la Figure 1 à partir de la coupe V-V.

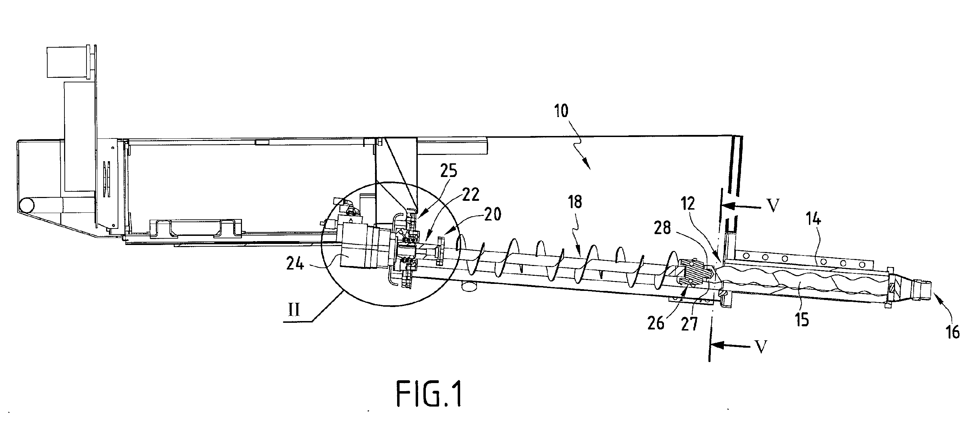

La Figure 1 illustre de façon schématique une machine à transporter et à projeter du mortier. La machine comporte un réceptacle 10 dans lequel on introduit le mortier prêt à être projeté ; le réceptacle 10 présente un orifice de sortie 12 débouchant dans une pompe Moineau 14. La pompe Moineau 14, grâce à l'entraînement en rotation de son rotor 15, permet de pomper le mortier pour l'injecter dans une conduite non représentée, raccordée à la sortie 16 de la pompe Moineau 14. Le mortier est entraîné vers l'orifice de sortie 12 au moyen d'une vis d'Archimède 18 s'étendant dans le fond du réceptacle 10 sensiblement dans l'axe de ladite pompe Moineau 14. Une première extrémité 20 de la vis d'Archimède 18 est reliée de façon rigide à un arbre moteur 22 qui est susceptible d'être entraîné en rotation par des moyens d'entraînement 24 constitués par exemple d'un moteur hydraulique, lequel est situé en dehors du réceptacle 10 et relié par des moyens de liaison déformables à la paroi 25. La seconde extrémité 26 de la vis d'Archimède 18 est reliée à l'extrémité 27 du rotor 15 de la pompe Moineau 14 par des moyens 28 formant cardan, que l'on détaillera dans la suite de la description.

De la sorte, les moyens d'entraînement 24 de l'arbre moteur 22 permettent d'entraîner à la fois la vis d'Archimède 18 qui déplace le mortier vers l'orifice de sortie 12, et le rotor 15 de la pompe Moineau 14, par l'intermédiaire de la vis d'Archimède 18 qui permet de l'injecter à force dans ladite conduite.

Un problème posé que résout l'invention, réside dans les caractéristiques de la pompe Moineau 14, dont le rotor 15 doit être entraîné en rotation autour de son axe longitudinal, ce qui l'entraîne simultanément dans un mouvement excentré autour de l'axe longitudinal de la pompe 14. Ainsi, la seconde extrémité 26 de la vis d'Archimède 18 décrit un mouvement de rotation sur elle-même et un mouvement de rotation excentré autour de l'axe de la pompe 14 qui est fixe.

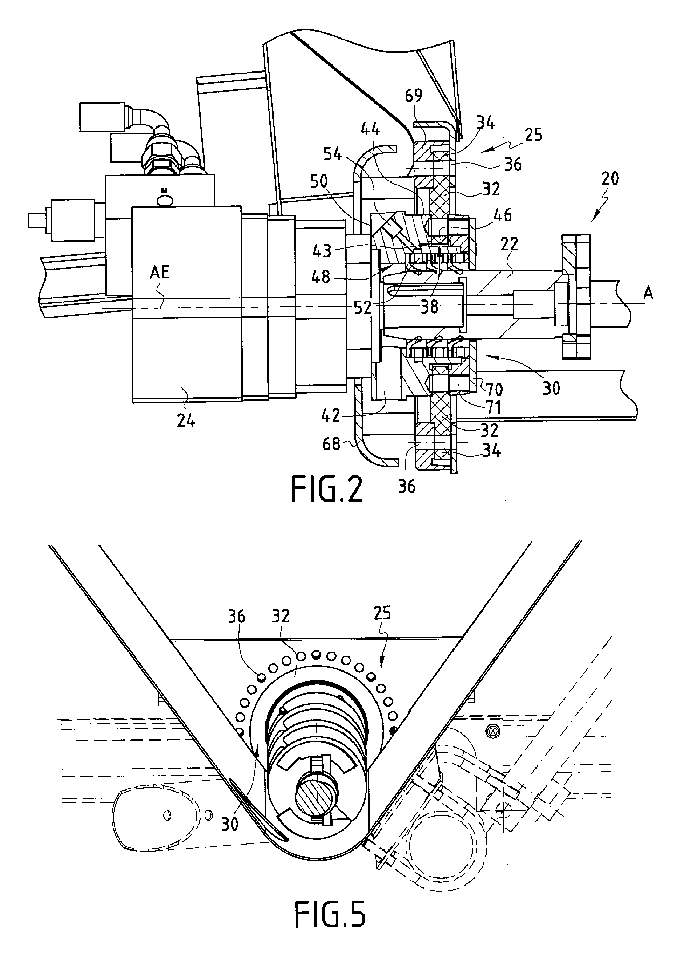

On se référera à la Figure 2 pour décrire plus en détail le mode de liaison des moyens d'entraînement 24 de l'arbre moteur 22 et de la paroi 25 que l'on retrouve sur cette Figure.

L'arbre moteur 22 est solidaire des moyens d'entraînement 24 situés en dehors du réceptacle 10, qui sont susceptibles de l'entraîner en rotation, et il s'étend à travers un premier évidement 30 ménagé dans la paroi 25. L'arbre moteur 22 est prolongé ensuite, dans le réceptacle 10, par la vis d'Archimède 18 à la première extrémité 20 de laquelle il est raccordé.

Une caractéristique de l'invention porte sur la liaison des moyens d'entraînement 24 à la paroi 25 du réceptacle 10 par l'intermédiaire de moyens de fixation déformables 32 constitués par un disque déformable, par exemple en élastomère, plus particulièrement en polyuréthane. Les moyens de fixation déformables 32 seront nommés dans la suite de la description, disque de fixation déformable 32.

On retrouve le disque de fixation déformable 32 illustré partiellement sur la Figure 5, présentant un bord périphérique 34 maintenu contre le bord du premier évidement 30 de la paroi 25 au moyen d'une bride 69 et d'éléments vissables 36. Ces derniers sont disposés, dans le pourtour du premier évidement 30, suffisamment proches les uns des autres, pour assurer l'étanchéité entre le bord périphérique 34 et le bord du premier évidement 30 vis à vis du mortier. En outre, le disque de fixation déformable 32, présente un second évidement central 38 dans lequel sont logés des moyens 42 formant boite à joints et sur lesquels sont montés les moyens d'entraînement 24 de l'arbre moteur 22. Les moyens 42 formant boite à joints sont de forme sensiblement circulaire et ils présentent une gorge 43 dans leur bord externe 44. De la sorte, le bord intérieur 46 définit par le second évidement central 38 qui est sensiblement circulaire est inséré dans ladite gorge pour réaliser une liaison étanche entre le disque de fixation déformable 32 et les moyens 42 formant boite à joints, grâce à une bride 70 et à des éléments vissables 71.

Les moyens 42 formant boite à joints présentent un bord interne 48 et une face d'appui 50 contre laquelle les moyens d'entraînement 24 de l'arbre moteur 22 sont maintenus en position fixe. En outre, ils comportent un réceptacle à lubrifiants 52 présentant un orifice de remplissage 54 et un orifice d'écoulement débouchant dans lesdits moyens formant boite à joints lubrifiée.

L'arbre moteur 22 qui fait saillie dans le réceptacle 10, est ajusté dans les moyens 42 formant boite à joints de façon à former également une liaison étanche vis-à-vis du mortier, de sorte que ce dernier est contenu de façon étanche par la paroi présentant le premier évidemment 30 et de laquelle fait saillie l'arbre moteur 22.

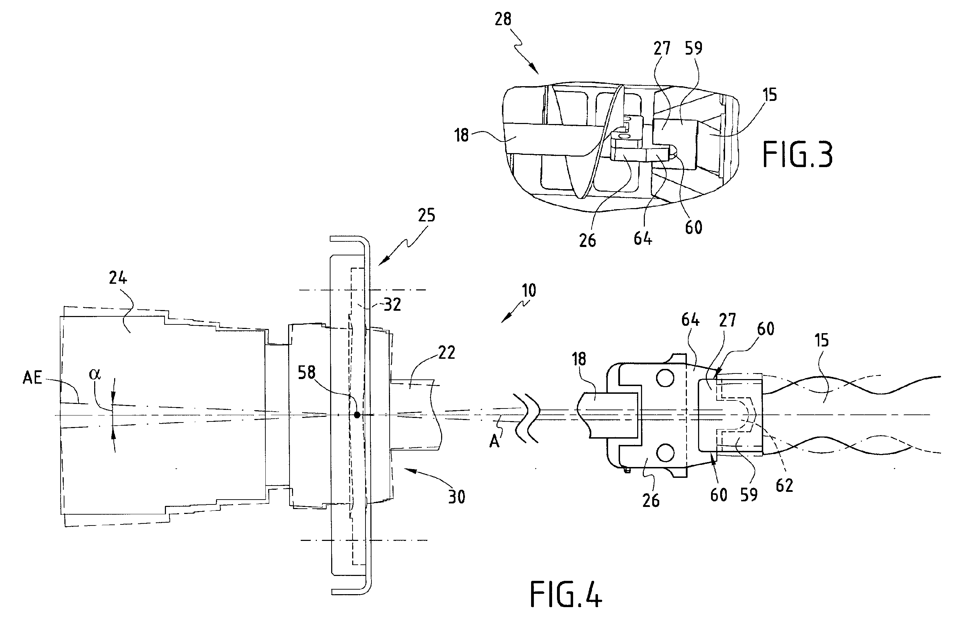

Ainsi, en référence à la Figure 4, on comprend que les moyens d'entraînement 24 de l'arbre moteur 22, dont l'axe AE est sensiblement confondu avec un axe A perpendiculaire à la paroi 25, sont mobiles par rapport à la paroi 25 du réceptacle 10 de telle sorte que l'axe AE soit susceptible d'être écarté de l'axe A selon un angle α dans toutes les directions de façon sensiblement équivalente. De la sorte, le premier ensemble constitué par l'arbre moteur 22, ses moyens d'entraînement 24 et les moyens formant boite à joints, qui est maintenu par le disque de fixation déformable est apte à pivoter autour d'un point de pivotement 58 sensiblement situé au centre de l'évidement 30.

En conséquence, la vis d'Archimède 18, telle que représentée sur la Figure 1, qui est reliée de façon solidaire à l'arbre moteur 22 et qui le prolonge selon son axe, est susceptible d'osciller autour du point de pivotement 58 illustré sur la Figure 3, avec ledit premier ensemble. On comprend que lorsque ledit premier ensemble pivote, le disque de fixation déformable 32 se déforme sensiblement par rapport à son plan moyen.

Ainsi, la vis d'Archimède 18, dont la seconde extrémité 26 est entraînée en rotation autour dudit second axe fixe, décrit un mouvement sensiblement conique, tout en tournant autour de son axe propre. Le sommet du cône définit par la vis d'Archimède, est situé au point de pivotement 58 et sa base est définit par le cercle formé par la rotation de sa seconde extrémité 26.

De la sorte, on comprend que l'extrémité 27 du rotor 15 de la pompe Moineau 14, et la seconde extrémité 26 de la vis d'Archimède 18 doivent nécessairement être reliées ensemble par les moyens formant cardan 28, que l'on détaillera en référence aux Figures 3 et 4 pour permettre la double rotation de la vis d'Archimède 18 et du rotor 15.

On retrouve sur la Figure 4 l'extrémité 27 du rotor 15 et la seconde extrémité 26 de la vis d'Archimède 18. L'extrémité 27 est constituée d'un manchon 59 dont la première partie présente deux fentes longitudinales opposées 60 débouchant au regard le la seconde extrémité 26. Cette dernière est constituée d'une pièce formant méplat présentant une extrémité 62 susceptible de pénétrer entièrement dans le manchon 59 et une partie médiane 64 au moins aussi large que le manchon 59 apte à s'encastrer dans les fentes longitudinales opposées 60. De la sorte, grâce à la coopération des fentes longitudinales opposées 60 et de la partie médiane 64, la vis d'Archimède 18 et le rotor 15 sont liés en rotation. En revanche, l'extrémité libre 62 et le méplat 64 présentent des dimensions sensiblement inférieures à celles de l'intérieur du manchon et des fentes de sorte qu'il existe un jeu entre les deux permettant l'articulation de la vis d'Archimède 18 par rapport au rotor 15 pour former cardan.

Ainsi, l'entraînement de l'arbre moteur 22 en rotation par les moyens d'entraînement 24 induit la rotation de la vis d'Archimède 18 autour de sont axe propre qu'elle transmet au rotor 15 par l'intermédiaire des moyens formant cardan 28 décrit ci-dessus. L'extrémité 27 du rotor étant entraînée selon un mouvement circulaire qu'elle transmet à la seconde extrémité 26 de la vis d'Archimède 18, cette dernière est entraînée selon un mouvement conique, ce qui provoque la déformation du disque de fixation déformable 32.

Ainsi, le système de fixation, selon l'invention, permet de s'affranchir de seconds moyens formant cardan, susceptibles de relier l'arbre moteur et la vis d'Archimède, et qui présentent l'inconvénient de s'user par friction ou par attaque chimique, dans le mortier qui est relativement abrasif et corrosif.

Selon un mode de mise en oeuvre de l'invention particulièrement avantageux, la paroi 25 comprend, dans ledit espace externe, des moyens d'arrêt bloquants 68 situés à proximité desdits moyens d'entraînement 24 de l'arbre moteur 22 susceptibles de bloquer lesdits moyens d'entraînement 24 de l'arbre moteur 22 en rotation et en translation dans une direction opposée à ladite paroi 25. Ainsi, les moyens d'arrêt bloquants 68 permettent, lorsque le disque de fixation déformable 32 se rompt, d'éviter que les moyens d'entraînement 24 entrent en rotation et qu'ils se déplacent dans une direction opposée au réceptacle 10. Dans ce dernier cas, la seconde extrémité de la vis d'Archimède 18 serait susceptible de se dégager du rotor 15 et devenir libre. De la sorte, la vis d'Archimède 18 pourrait effectuer des mouvements non contrôlés et dangereux pour les opérateurs.

Les moyens d'arrêt bloquants 68, représentés sur la Figure 2 sont constitués d'une plaque 68 reliée à la paroi 25 et qui présente un évidement que les moyens d'entraînement 24 de l'arbre moteur 22 traversent. L'évidement et la portion des moyens d'entraînement 24 qui le traverse, présentent des formes complémentaires non circulaires, de façon à pouvoir coopérer ensemble et à bloquer en rotation les moyens d'entraînement 24 dans le cas d'une rupture du disque de fixation déformable 32. En outre, l'évidement présente des dimensions supérieures à celles de ladite portion qui le traverse de manière à obtenir un jeu fonctionnel entre la plaque 68 qui est maintenue en position fixe et les moyens d'entraînement 24 qui sont en mouvement lors du fonctionnement.

En cas de rupture du disque de fixation déformable 32, les bords de la face d'appui 50 de la boite à joint 42 sont susceptibles de venir en butée contre la plaque 68 pour éviter que la seconde extrémité 26 de la vis d'Archimède 18 se désengage du rotor 15.

## Revendications

1. Système de fixation, notamment pour machine à projeter du béton ou du mortier, ledit système de fixation étant susceptible de relier des moyens d'entraînement d'un arbre moteur, au bord d'un premier évidement ménagé dans une paroi, ladite paroi séparant un espace externe, dans lequel se situent lesdits moyens d'entraînement dudit arbre moteur, et un espace interne dans lequel se situe un organe d'entraînement, ledit arbre moteur traversant ledit évidement et étant relié audit organe d'entraînement pour l'entraîner selon un mouvement ayant une composante excentrique par rapport à un axe fixe,
**caractérisé en ce qu'**il comprend :
- des moyens de fixation déformables (32) présentant un second évidement central (38), lesdits moyens de fixation déformables (32) comportant un bord périphérique (34) solidaire de ladite paroi (25) au voisinage du bord dudit premier évidement (30) de ladite paroi (25) et un bord intérieur (46) défini par ledit second évidement central (38), ledit arbre moteur (22) traversant ledit second évidemment central (38) ;
et **en ce que** lesdits moyens d'entraînement (24) de l'arbre moteur (22) sont solidaires desdits moyens de fixation déformables (32) de façon que lesdits moyens de fixation déformables (32) soient susceptibles de se déformer lorsque lesdits moyens d'entraînement (24) de l'arbre moteur (22) sont guidés selon ladite composante excentrique dudit mouvement par ledit arbre moteur (22).

2. Système de fixation selon la revendication 1, **caractérisé en ce que** les moyens de fixation déformables (32) sont constitués d'un disque déformable susceptible de s'étendre entièrement dans l'espace situé entre le bord dudit premier évidemment (30) et ledit arbre d'entraînement (22) de façon à réaliser une paroi étanche entre ledit espace interne (10) et ledit espace externe.

3. Système de fixation selon la revendication 1, **caractérisé en ce qu'**il comprend en outre des moyens (42) formant boite à joints susceptibles de relier ensemble lesdits moyens d'entraînement (24) de l'arbre moteur (22) et lesdits moyens de fixation déformables (32), lesdits moyens (42) formant boite à joints présentant un bord externe (44), un bord interne (48) et une face d'appui (50), ledit bord externe (44) étant solidaire desdits moyens de fixation déformables (32) au voisinage dudit bord intérieur (46) dudit second évidemment central (38), ledit bord interne (48) entourant ledit arbre moteur (22) et lesdits moyens d'entraînement (24) de l'arbre moteur (22) étant solidaires de ladite face d'appui (50).

4. Système de fixation selon la revendication 3, **caractérisé en ce que** lesdits moyens (42) formant boite à joints comportent un réceptacle à lubrifiants (52) présentant un orifice de remplissage (54) débouchant vers l'extérieur et au moins un orifice d'écoulement débouchant dans ledit bord interne (48) en contact avec ledit arbre moteur (22).

5. Système de fixation selon l'une quelconque des revendications 1 à 4, **caractérisé en ce que** ladite paroi (25) comprend en outre, dans ledit espace externe, des moyens d'arrêt bloquants (68) situés à proximité desdits moyens d'entraînement (24) de l'arbre moteur (22) susceptibles de bloquer lesdits moyens d'entraînement (24) de l'arbre moteur (22) en rotation et en translation dans une direction opposée à ladite paroi (25).

6. Système de fixation selon l'une quelconque des revendications 1 à 5, **caractérisé en ce que** ledit organe d'entraînement comporte un arbre d'entraînement (18) s'étendant d'une première extrémité (20) reliée audit arbre moteur (22) à une seconde extrémité (26) reliée par des moyens formant cardan (28) à un rotor (15), ledit rotor (15) étant susceptible d'être entraîné en rotation autour de son axe, ledit rotor (15) décrivant simultanément un mouvement ayant une composante excentrique.

7. Système de fixation selon l'une quelconque des revendications 1 à 6, **caractérisé en ce que** ledit arbre moteur (22) et ledit organe d'entraînement (18) sont reliés ensemble par une liaison rigide de façon que ledit arbre moteur (22) soit susceptible de décrire un mouvement comportant ladite composante excentrique, par quoi ledit arbre moteur (22) est susceptible de guider lesdits moyens d'entraînement (24) de l'arbre moteur (22) selon ledit mouvement à composante excentrique et lesdits moyens d'entraînement (24) de l'arbre moteur (22) de déformer lesdits moyens de fixation déformables (32).

8. Machine à pomper ou à projeter du béton ou du mortier, **caractérisée en ce qu'**elle comprend :
- un réceptacle (10) présentant une première paroi (25) dans laquelle est ménagé un premier évidement (30) et une seconde paroi opposée présentant un orifice de sortie (12), la portion dudit réceptacle (10) située entre lesdites parois définissant un espace interne ;
- des moyens formant pompe (14) prolongeant ledit orifice de sortie (12), lesdits moyens formant pompe (14) présentant un rotor (15) faisant saillie dans ledit réceptacle (10), ledit rotor (15) étant susceptible de décrire simultanément, un mouvement de rotation autour de son axe et un mouvement ayant une composante excentrique par rapport à un axe fixe ;
- des moyens d'entraînement (24) d'un arbre moteur (22) situés dans ledit espace externe et reliés au bord dudit premier évidement (30) au moyen d'un système de fixation selon la revendication 6 ou 7, ledit arbre d'entraînement (18) reliant ledit arbre moteur (22) et ledit rotor (15).
